# FASCICULE DE BREVET EUROPEEN

(11) **EP 3 427 917 B1**
(45) Date de publication et mention de la délivrance du brevet: **08.04.2020**
(21) Numéro de dépôt: 18305706.6
(22) Date de dépôt: 11.06.2018
(51) Int. Cl.: B29C 49/42, B65G 47/86, B29C 49/06

(54) **DISPOSITIF À MANDRIN POUR CONVOYAGE DE CORPS CREUX ET INSTALLATION DE FABRICATION DE RECIPIENTS**
SPANNFUTTERVORRICHTUNG ZUM FÖRDERN VON HOHLKÖRPERN, UND ANLAGE ZUR HERSTELLUNG VON BEHÄLTERN
DEVICE WITH A CHUCK FOR CONVEYING HOLLOW BODIES AND FACILITY FOR MANUFACTURING CONTAINERS

(30) Priorité: 10.07.2017 FR 1756501
(43) Date de publication de la demande: 16.01.2019
(73) Titulaire: Sidel Participations, 76930 Octeville-sur-Mer (FR)
(72) Inventeur: PASQUIER, Hervé, 76930 Octeville-sur-mer (FR); BOURVELLEC, Loïc, 76930 Octeville-sur-mer (FR)
(74) Mandataire: Grassin d'Alphonse, Emmanuel Jean Marie

(56) Documents cités:
- US-A1- 2008 044 510
- US-B2- 7 736 142
- US-B2- 7 849 996

## Description

L'invention se rapporte à un dispositif de convoyage de corps creux comportant un mandrin commandé entre une position active et une position inactive par une came fixe. Les documents US2008/044510A1, US7736142B2 et US7849996B2 décrivent des dispositifs de convoyage de corps creux, selon l'état de la technique antérieure.

Dans la suite de la description, le terme corps creux désignera soit une préforme, soit un récipient fini. L'invention est ici plus particulièrement décrite en application à une préforme.

Les préformes présentent généralement un corps sensiblement cylindrique de révolution à paroi tubulaire épaisse qui est fermé à l'une de ses extrémités axiales par un fond à paroi épaisse, et qui est prolongé à son autre extrémité par un col, lui aussi tubulaire. Le col est conformé à sa forme et à ses dimensions définitives tandis que le corps de la préforme, préalablement chauffé, est destiné à subir une déformation relativement importante pour le conformer en récipient lors d'une étape de formage.

L'installation de production comporte une station de conditionnement thermique qui permet, lors d'une étape préalable de chauffage, de rendre malléable le corps de la préforme est par chauffage au-delà d'une température de transition vitreuse.

Ensuite, lors de l'étape de formage, la préforme ainsi chauffée est placée dans un moule d'une station de formage qui présente une empreinte de moulage conforme au récipient à obtenir. Un fluide sous pression, tel que de l'air, est alors injecté dans le corps malléable de la préforme afin d'en plaquer la paroi contre l'empreinte du moule.

Tout au long de leur trajet à travers l'installation de production, les préformes sont prises en charge individuellement par des dispositifs de convoyage. Certains de ces dispositifs de convoyage, notamment celui de la station de conditionnement thermique, comportent des mandrins dont chacun est destiné à être inséré à force dans le col d'une préforme lors d'une opération dite de "vêtissage". Le mandrin permet ainsi de faire circuler la préforme dans la station de conditionnement thermique. La préforme ainsi chauffée est ensuite transférée à une roue de transfert suivante. A cet effet, le mandrin est extrait du col de la préforme lors d'une opération dite de "dévêtissage", aussitôt que la préforme est prise en charge par ladite roue de transfert.

Les opérations de vêtissage et de dévêtissage sont généralement commandées par une came. Le mandrin est généralement rappelé élastiquement vers sa position inactive. La vitesse de l'opération de dévêtissage est limitée par la pente que doit présenter le chemin de came pour commander le mandrin vers sa position inactive à l'encontre de l'effort de rappel élastique.

On cherche à augmenter la cadence de production d'une telle installation de production de récipients en matériau thermoplastique, notamment de bouteilles, pour atteindre, voire dépasser, 50 000 récipients par heure. Ceci correspond à la cadence de défilement des préformes dans le four. La vitesse de déplacement des préformes est de l'ordre de 1 m/s. A cette vitesse assez élevée, des problèmes peuvent se produire, notamment lors du transfert des préformes d'un dispositif de convoyage à un autre.

Un premier problème causé par la vitesse de défilement intervient spécifiquement lors de la production de récipients qui ne sont pas axisymétriques par rapport à l'axe du col.

Traditionnellement, pour produire des récipients axisymétriques, le corps de la préforme est chauffé de manière homogène lors de l'étape de chauffage. De ce fait, il subit une expansion qui est homogène dans toutes les directions radiales. La position angulaire de la préforme par rapport au moule qui la reçoit est donc sans importance.

Cependant, pour obtenir un récipient de section non symétrique de révolution à paroi d'épaisseur homogène par soufflage ou étirage-soufflage, il est connu de chauffer certaines portions angulaires du corps de la préforme à une température supérieure à d'autres portions de la préforme. Un tel procédé, appelé couramment "procédé de chauffe préférentielle", permet de conférer aux portions surchauffées des caractéristiques mécaniques permettant un étirage, notamment circonférentiel, plus rapide par rapport aux portions chauffées à température normale.

La forme et la répartition des portions surchauffées définissent un profil de chauffage de la préforme. Le profil de chauffage est adapté en fonction de la forme du récipient final à obtenir.

Pour obtenir un récipient satisfaisant, il est nécessaire d'indexer la position angulaire de la préforme chaude autour de son axe principal par rapport au moule afin d'orienter correctement les portions surchauffées vers les portions correspondantes de l'empreinte du moule. Cependant, lorsque la vitesse de défilement des préformes est très élevée, les préformes subissent une rotation involontaire et aléatoire lorsque le mandrin est retiré de leur col à la sortie de la station de conditionnement thermique. Ceci est notamment dû à la faible vitesse d'extraction du mandrin lors de l'opération de dévêtissage.

Ce problème limite la vitesse de production des récipients et oblige à insérer une étape supplémentaire d'indexation angulaire de la préforme entre sa sortie de la station de conditionnement thermique et son entrée dans la station de formage.

Un deuxième problème causé par la vitesse de défilement peut intervenir lors de l'opération de vêtissage de la préforme à l'entrée du dispositif de convoyage. Il arrive qu'une préforme ne soit pas correctement centrée par rapport au mandrin, qui ne peut dès lors pas être inséré correctement dans le col. A la sortie de la roue, une préforme qui n'est pas tenue correctement peut être projetée et venir endommager certaines pièces du four (notamment les émetteurs infrarouge, qui sont généralement fragiles). La projection est encore plus violente lorsque les préformes, généralement orientées col en haut dans la roue, sont retournées à la sortie de celle-ci pour être chauffées col en bas dans le four.

Qu'une préforme soit manquante sur la ligne de production ne pose pas de problème particulier, mais, pour des raisons de sécurité, on ne peut laisser l'installation fonctionner avec des pièces endommagées, de même qu'il n'est pas souhaitable de laisser des préformes traîner au pied de la roue ou, pire, dans le four. Il est donc nécessaire de stopper la roue, ce qui interrompt toute la production, le temps de débarrasser l'installation des préformes éjectées.

Les dispositifs d'éjection connus imposent l'éjection d'au moins trois préformes correctement positionnées en même temps que la préforme incorrectement positionnée.

L'invention propose une solution pour augmenter la vitesse de dévêtissage des préformes, aussi une éjection contrôlée, rapide et fiable de la préforme mal positionnée.

### BREF RESUME DE L'INVENTION

L'invention propose un dispositif de convoyage de corps creux pour une installation de fabrication de récipients par formage de préformes, le dispositif de convoyage comportant :
- au moins un élément de transport comportant au moins un mandrin monté coulissant verticalement entre une position active dans laquelle une tête du mandrin est destinée à être emmanchée dans un col d'un corps creux et une position inactive dans laquelle la tête est destinée à être extraite du col ;
- un suiveur de came qui est solidaire en coulissement du mandrin entre une position active correspondant à la position active du mandrin et une position inactive correspondant à la position inactive du mandrin ;

- un segment amont inférieur de came présentant un premier chemin de came le long duquel un suiveur de came occupe sa position active ;
- un tronçon intermédiaire de came agencé dans le prolongement du premier chemin de came pour le passage du suiveur de came depuis sa position active jusqu'à sa position inactive ;
caractérisé en ce que le tronçon intermédiaire est un tronçon élévateur présentant un chemin intermédiaire de came, le tronçon élévateur étant monté coulissant entre une position inférieure dans laquelle une extrémité amont de son chemin de came est à niveau avec le premier chemin de came et une position supérieure dans laquelle une extrémité aval de son chemin de came est à niveau avec la position inactive du suiveur de came.

Un tel dispositif de convoyage permet de réduire le temps d'extraction du mandrin par rapport à un dispositif dans lequel le tronçon intermédiaire de came est formé par une rampe.

Selon un mode de réalisation, le dispositif comporte un segment de came aval supérieur agencé directement en aval du tronçon élévateur et présentant un deuxième chemin de came le long duquel le suiveur de came commande le mandrin dans sa position inactive, une extrémité aval du chemin de came du tronçon élévateur étant à niveau avec le deuxième chemin de came lorsque le tronçon élévateur occupe sa position supérieure. Un tel mode de réalisation du dispositif peut être utilisé pour améliorer l'opération de dévétissage du mandrin, c'est-à-dire de retrait du mandrin de fixation. On peut utiliser un tel dispositif par exemple en aval du four de chauffe, pour qu'un autre dispositif de préhension telle qu'une pince, puisse apporter la préforme chaude dans une machine de soufflage.

Selon un autre mode de réalisation, le dispositif comporte un segment de came aval inférieur agencé directement en aval du tronçon élévateur et présentant un deuxième chemin de came le long duquel le suiveur de came commande le mandrin dans sa position active. Un tel mode de réalisation du dispositif peut être utilisé pour améliorer l'opération de d'éjection d'une préforme dont l'opération d'introduction du mandrin s'est mal déroulé. Là encore, le mandrin mal positionné est entièrement retiré de la préforme. La préforme peut alors être immédiatement éjectée, et le mandrin peut revenir en position basse, mais sans préforme. Avantageusement, on peut utiliser un tel dispositif en amont des éléments de chauffage du four.

Selon d'autres caractéristiques de l'invention :
- le tronçon élévateur est mu par un moteur électrique ;
- le moteur électrique est un moteur linéaire comportant une tige motrice commandée en coulissement par une force électromagnétique ;
- le tronçon élévateur est monté solidaire en déplacement avec la tige motrice ;
- le moteur électrique est un moteur synchrone qui comporte un arbre moteur rotatif ;
- l'arbre moteur entraîne au moins un système bielle - manivelle qui transforme le mouvement de rotation de l'arbre moteur en mouvement de coulissement du tronçon élévateur ;
- le tronçon élévateur présente un profil sensiblement rectiligne orthogonal à la direction de déplacement de l'élément de transport.

L'invention concerne aussi une installation de fabrication de récipients par formage à partir de préformes comportant un dispositif de convoyage réalisé selon les enseignements de l'invention, l'installation comportant :
- une pluralité desdits éléments de transport formant les maillons d'une chaîne de transport fermée ;
- une roue de guidage qui est montée à rotation sur un bâti fixe qui engrène la chaîne de transport et qui embarque une pluralité desdits poussoirs portant un suiveur de came propres à venir en prise avec chaque mandrin portés par les éléments de transport ;
- les segments de came fixes étant portés par le bâti ;
- une roue de réception qui est rotative de manière synchronisée avec la roue de guidage et qui comporte des organes de réception individuelle de chaque préforme à un point de dévêtissage tangent avec la roue de guidage ;
caractérisé en ce que le tronçon élévateur est agencé au point de dévêtissage pour permettre l'extraction du mandrin des préformes lorsque celles-ci sont prises en charge par l'organe de réception.

L'invention concerne encore une installation de fabrication de récipients par formage à partir de préformes comportant un dispositif de convoyage réalisé selon les enseignements de l'invention, l'installation comportant :
- une pluralité desdits éléments de transport formant les maillons d'une chaîne de transport fermée ;
- une roue de guidage qui est montée à rotation sur un bâti fixe qui engrène la chaîne de transport et qui embarque une pluralité desdits poussoirs portant un suiveur de came propres à venir en prise avec chaque mandrin portés par les éléments de transport ;
- les segments de came fixes étant portés par le bâti ;
- une roue d'alimentation qui est rotative de manière synchronisée avec la roue de guidage et qui comporte des organes de transport individuel de chaque préforme jusqu'à un point de vêtissage tangent avec la roue de guidage, les préformes poursuivant leur course le long de la roue de guidage le long d'une zone de vêtissage ;
caractérisé en ce que le tronçon élévateur est agencé dans la zone de vêtissage.

Selon une autre caractéristique de l'installation, le dispositif de convoyage équipe une station de conditionnement thermique qui est agencée en amont d'une station de formage, notamment d'une station de soufflage.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de dessus qui représente schématiquement une partie d'un dispositif de convoyage réalisé selon les enseignements de l'invention ;
- la figure 2 est une vue en coupe selon le plan de coupe 2-2 de la figure 1 qui représente un poussoir commandé dans une position inactive par un segment supérieur de came ;
- la figure 3 est une vue en coupe selon le plan de coupe 3-3 de la figure 1 qui représente un poussoir commandé dans une position active par un segment inférieur de came ;
- la figure 4 est une vue en perspective qui représente une roue de guidage du dispositif de convoyage de la figure 1 ;
- les figures 5 à 8 sont des vue de côtés qui représente l'action d'un tronçon de came élévateur réalisé selon les enseignements de l'invention pour faire passer un galet suiveur de came d'un poussoir depuis sa position active jusqu'à sa position inactive ;
- la figure 9 est une vue schématique qui représente un moteur linéaire de commande du tronçon élévateur des figures 5 à 8 ;
- la figure 10 est une vue schématique qui représente un moteur pas-à-pas de commande du tronçon élévateur des figures 5 à 8 ;
- les figures 11 et 12 représentent des vues de côtés d'un tronçon élévateur agencé en un point d'éjection des préformes.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif des orientations :
- longitudinale "L" orientée selon le sens de déplacement des éléments de transport ;
- verticale "V" orientée selon l'axe de coulissement des mandrins ;
- transversale "T" orientée orthogonalement aux directions longitudinale et verticale.

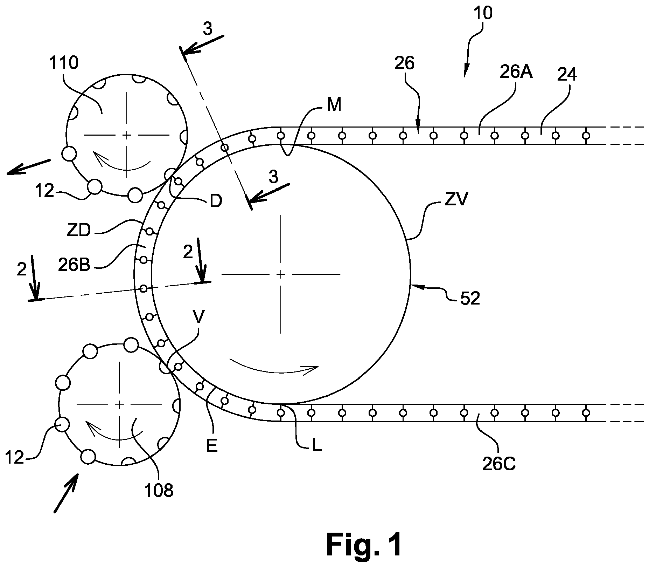

Sur la figure 1 est représentée schématiquement une partie d'un dispositif 10 de convoyage de corps 12 creux en matière plastique. Dans la description qui suit, les corps 12 creux représentés sont des préformes de récipients à partir desquelles doivent être formés (par soufflage ou étirage soufflage) des récipients (non représentés). Le dispositif 10 de convoyage est destiné à être intégré à une installation de production de récipients. Dans la description qui suit, la référence 12 est utilisée pour désigner une ou plusieurs "préformes", étant entendu que le dispositif 10 de convoyage, moyennant des modifications essentiellement dimensionnelles, pourrait être utilisée pour transporter d'autres types de corps creux notamment des récipients intermédiaires ou des récipients finaux tels qu'on peut en rencontrer dans des installations de production ou de traitement de récipients.

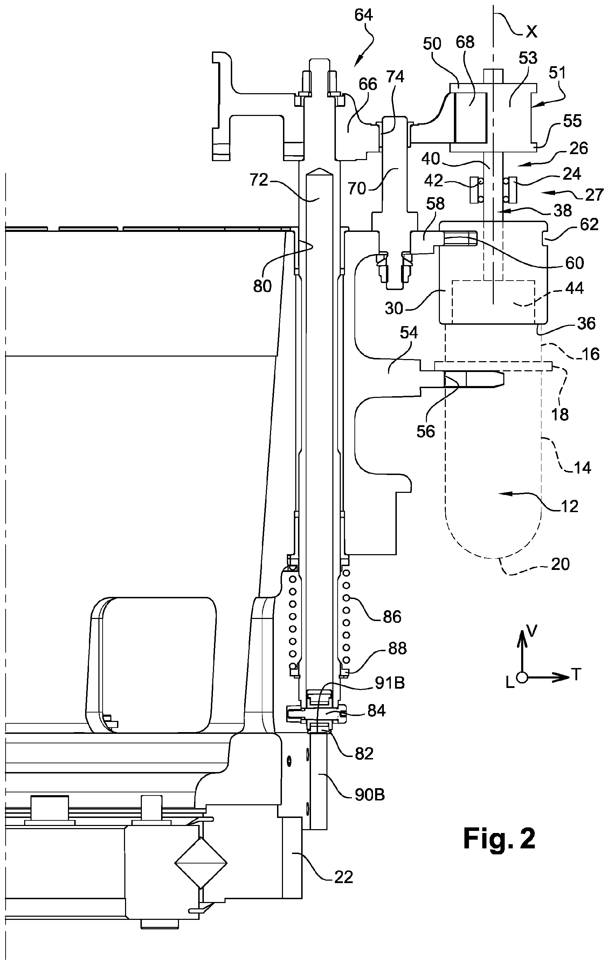

Comme cela est représenté à la figure 2, chaque corps 12 creux comprend un corps 14 (cylindrique dans le cas d'une préforme; de formes diverses dans le cas d'un récipient final ou intermédiaire), un col 16 qui s'étend à partir d'une extrémité supérieure du corps 14, une collerette 18 qui sépare le col 16 du corps 14, et un fond 20 qui s'étend à une extrémité inférieure du corps 14, opposée au col 16.

Le dispositif 10 de convoyage est par exemple prévu pour transporter les préformes 12 dans une station de conditionnement thermique (non représentée) où les préformes 12 doivent être chauffées à une température supérieure à leur température de transition vitreuse, en vue d'être ensuite conformées en récipients au sein d'une station de formage (non représentée), également appelée souffleuse, intégrée à la même installation de production et équipée d'un carrousel sur lequel sont montés une pluralité de moules à l'empreinte des récipients.

Le dispositif 10 de convoyage comprend un bâti 22 fixe et au moins un élément 24 de transport. Plus particulièrement, le dispositif 10 de convoyage comporte ici une pluralité desdits éléments 24 de transport formant les maillons d'une chaîne 26 de transport fermée. La chaîne 26 de transport souple est montée déplaçable par rapport au bâti 22. A cet effet, les éléments 24 de transport sont montés articulés les uns aux autres.

Chaque élément 24 de transport porte au moins une tournette 27. Chaque tournette 27 comporte une douille 30 d'axe vertical qui est agencée sous l'élément 24 de transport. La douille 30 présente à son extrémité inférieure une face 36 annulaire de butée qui entoure un orifice inférieur débouchant de la douille 30.

Chaque tournette 27 comprend un mandrin 38 monté coulissant en translation verticale suivant un axe X vertical, par rapport à l'élément 24 de transport. Le mandrin 38 comprend une tige 40 cylindrique montée en libre rotation autour de l'axe X dans l'élément 24 de transport, avec interposition de paliers 42. Le mandrin 38 comprend, à une extrémité inférieure de la tige 40, une tête 44 de plus grand diamètre, qui s'étend dans la douille 30.

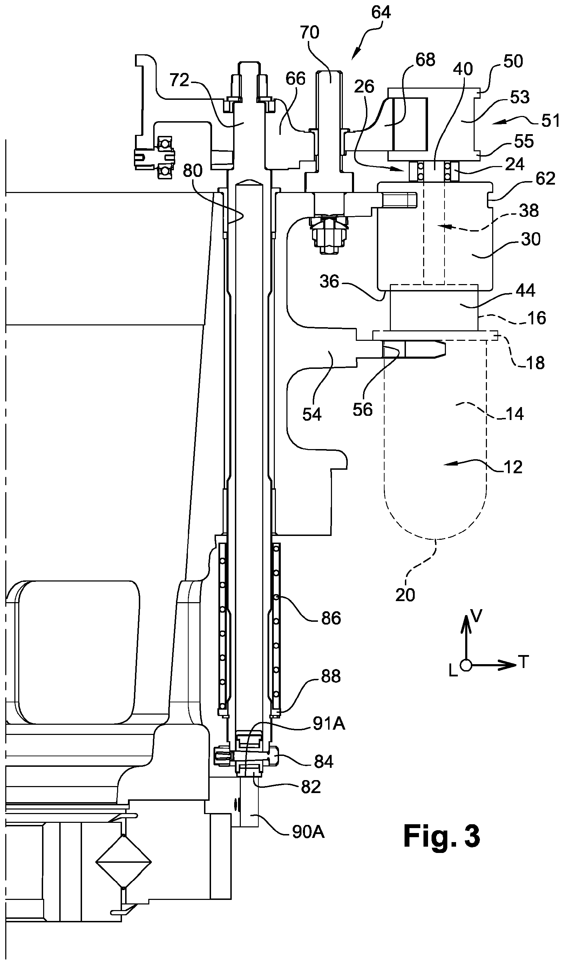

Le mandrin 38 est monté non seulement en libre rotation par rapport à la douille 30, mais également en coulissement vertical, entre une position inactive (figure 2), dans laquelle la tête 44 est rétractée au-dessus de la face 36 de butée, et une position active dans laquelle la tête 44 fait saillie vers le bas par rapport à la face 36 de butée pour s'emmancher dans le col 16 d'une préforme 12 (figure 3).

La tournette 27 comprend un ressort (non représenté) de rappel interposé entre la tête 44 du mandrin 38 et la douille 30 afin de rappeler la tête 44 du mandrin vers sa position active.

De manière connue, la tête 44 du mandrin 38 est pourvue de moyens élastiques (non représentés), tel qu'un joint torique, avantageusement réalisé dans un matériau élastique (tel qu'un élastomère), et dont le diamètre externe est égal ou légèrement supérieur au diamètre interne du col 16 d'une préforme 12, de façon à assurer la sustentation de la préforme 12 par frottement contre la paroi interne du col 16, lorsque la tête 44 est en position active.

A une extrémité supérieure, le mandrin 38 est pourvu d'un pignon 50 monté sur la tige 40, solidaire en rotation de celle-ci. Le pignon 50 est intégré à un embout 51 en forme de bobine qui comprend un fût 53 à une extrémité duquel s'étend le pignon 50 et, à l'opposé de celui-ci, un flasque 55 de diamètre inférieur au pignon 50. Le pignon 50 est destiné à engrener une crémaillère (non représentée) qui s'étend le long de la station de conditionnement thermique, de façon à entraîner la tournette 27 en rotation et ainsi exposer tout le corps 14 de la préforme 12 au rayonnement chauffant de la station de conditionnement thermique.

En se reportant à nouveau à la figure 1, le dispositif 10 de convoyage comprend, par ailleurs, une première roue 52 montée rotative sur le bâti 22, qui est de préférence menante (mais pourrait être menée) et qui engrène la chaîne 26 de transport entre un point M d'engrenage et un point L de libération, et une deuxième roue (non représentée), qui est de préférence menée (mais pourrait être menante) sur laquelle circule également la chaîne 26.

Selon un mode de réalisation illustré sur la figure 1, le point M d'engrenage et le point L de libération sont diamétralement opposés à la périphérie de la roue 52 mais cette configuration n'est nullement limitative. La chaîne 26 comprend un brin 26A retour, linéaire, où les éléments 24 de transport sont écartés de la roue 52, un brin 26B engrené, qui s'étend en arc de cercle du point M d'engrenage au point L de libération, et un brin 26C aller, linéaire, où les éléments 24 de transport sont à nouveau écartés de la roue 52. Sur la roue 52, la chaîne 26 circule du point M d'engrenage vers le point L de libération (sens antihoraire sur la figure 1).

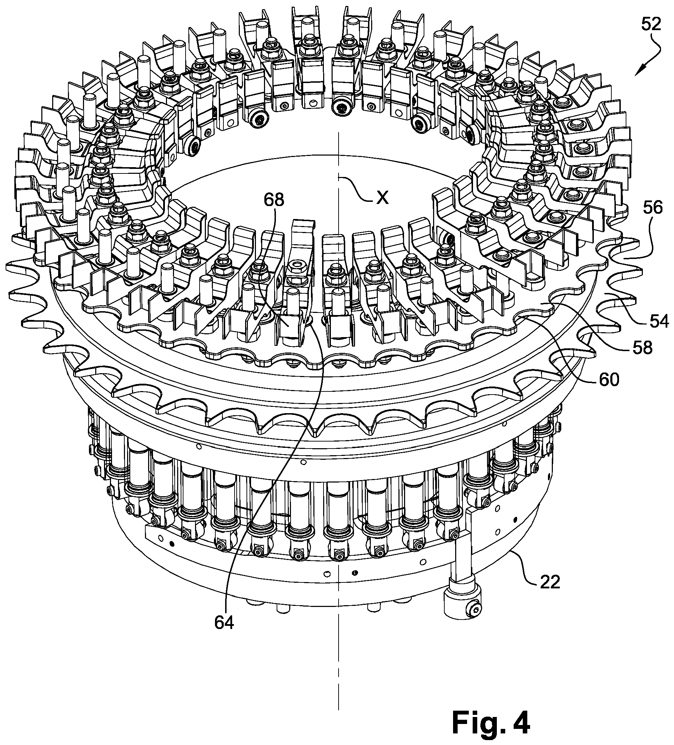

Comme cela est représenté à la figure 4, la roue 52 comprend, en premier lieu, une couronne 54 inférieure dentée montée en rotation par rapport au bâti 22. La couronne 54 inférieure comprend une pluralité d'échancrures 56 périphériques dans chacune desquelles vient successivement s'emboîter radialement le corps 14 d'une préforme 12, sous la collerette 18, celle-ci venant reposer sur la couronne 54 inférieure.

La roue 52 comprend, en deuxième lieu, une couronne 58 supérieure dentée, solidaire de la couronne 54 inférieure. La couronne 58 supérieure est pourvue, sur sa périphérie, d'une pluralité d'alvéoles 60 périphériques chacune située à l'aplomb d'une échancrure 56 de la couronne 54 inférieure. Chaque alvéole 60 est agencée pour engrener une gorge 62 de chaque douille 30 qui se trouve ainsi bloquée en translation suivant l'axe X vertical, comme cela est illustré à la figure 2.

La roue 52 embarque, en troisième lieu, une pluralité de poussoirs 64 destinés chacun à venir en prise d'engrenage avec un mandrin 38 sur la portion de trajectoire située entre les points M et L. Chaque poussoir 64 comprend un corps 66 métallique (par exemple en aluminium) qui s'étend radialement et présente, à une extrémité externe, une queue 68 conformée en fourchette pour venir en prise d'engrenage avec l'embout 51, entre le pignon 50 et le flasque 55.

Comme représenté à la figure 2, chaque poussoir 64 est monté coulissant en translation parallèlement à l'axe X vertical au moyen d'une paire de guides, à savoir un guide 70 externe et un guide 72 interne. Le guide 70 externe se présente sous forme d'une tige dont une section supérieure est reçue en coulissement dans un orifice 74 du corps 66 du poussoir 64. Une section inférieure du guide 70 externe est fixée au moyen d'un écrou à la couronne 58 supérieure.

Le guide 72 interne est fixé par une section supérieure au corps 66 du poussoir 64, ici au moyen d'un écrou. Une section inférieure du guide 72 interne est emmanchée dans un trou 80 pratiqué dans la couronne 58 supérieure et dans la couronne 54 inférieure dont elle dépasse vers le bas, avec possibilité de translation verticale. A une extrémité inférieure, le guide 72 interne est conformé en chape. Un suiveur de came formé par un galet 82 inférieur est monté en rotation par rapport au guide 72 interne autour d'un axe 84 monté dans cette chape. Un ressort 86 de rappel fonctionnant en compression est interposé entre la roue 52 et une collerette 88 formée radialement en saillie sur le guide 72 interne, à la périphérie de sa section inférieure.

Le poussoir 64 est ainsi monté coulissant en translation verticale, par rapport à la couronne 58 supérieure, entre une position inactive dans laquelle, lorsque le poussoir 64 est en prise avec un mandrin 38 (c'est-à-dire que la queue 68 est en prise d'engrenage avec l'embout 51), il place celui-ci en position inactive (figure 2), et une position active dans laquelle, lorsque le poussoir 64 est en prise avec un mandrin 38, il place celui-ci en position active (figure 3), cependant que la douille 30 est maintenue en position par coopération de l'alvéole 60 de la couronne 58 supérieure.

Lorsque le poussoir 64 est en prise avec un mandrin 38, le suiveur de came formé par le galet 82 est alors solidaire en coulissement du mandrin 38 entre une position active correspondant à la position active du mandrin 38 et une position inactive correspondant à la position inactive du mandrin 38.

Comme illustré sur les figures 2 et 3, le bâti 22 est pourvu d'une came 90A, 90B fixe sur un chemin 91A, 91B de laquelle le galet 82 est en appui. La came fixe comporte un segment 90A amont qui porte un chemin 91A inférieur (figure 3) et un segment 90B aval qui porte un chemin 91B supérieur (figure 2). Lorsque le poussoir 64 est à l'aplomb du segment 90A amont, le ressort 86 maintient le poussoir 64 dans sa position active (figure 3). Lorsque le poussoir 64 est à l'aplomb du segment 90B aval supérieur, le galet 82 le maintien, via le guide 72 interne, dans sa position inactive (figure 2), à encontre de l'effort de rappel du ressort 86.

Pour permettre le passage du galet 82 depuis le segment 90A amont inférieur jusqu'au segment 90B aval supérieur, il était jusqu'à présent connu d'agencer une rampe qui s'étendait depuis une extrémité amont située au niveau du chemin 91A inférieur du segment 90A amont jusqu'à une extrémité aval située au niveau du chemin 91B supérieur du segment 90B aval. Une telle rampe était éventuellement escamotable, notamment pour des fonctions d'éjection de préformes mal positionnées. Dans le cas d'une rampe escamotable, le déplacement de la rampe avait lieu avant que le galet n'atteigne la rampe. La montée du poussoir avait ainsi lieu après le déplacement de la rampe escamotable jusqu'à sa position active.

Néanmoins, on a constaté que l'agencement d'une rampe entre les deux segments 90A, 90B de came ne permettait pas d'obtenir une opération de dévêtissage suffisamment rapide. En effet, pour réduire le temps de l'opération de dévêtissage, il faut réduire la distance entre les deux segments 90A, 90B de came. Or, lorsque la pente de la rampe devenant ainsi trop importante, le choc du galet 82 contre la rampe entraîne des efforts de flexion très important sur le guide 72 interne du poussoir 64. Avec l'utilisation d'une telle rampe, il n'est donc pas possible de réduire la distance séparant les deux segments 90A, 90B de came au-dessous d'un seuil déterminé sans endommager le poussoir 64.

Pour résoudre ce problème, l'invention propose d'équiper le dispositif 10 de convoyage d'un tronçon 92 de came élévateur qui est interposé entre le segment 90A amont et le segment 90B aval. Plus particulièrement, le tronçon 92 élévateur est agencé entre une face 93 verticale d'extrémité aval du segment 90A amont et une face 95 verticale d'extrémité amont du segment 90B aval. Le tronçon 92 élévateur est délimité longitudinalement par une face 97 verticale d'extrémité amont et par une face 99 verticale d'extrémité aval.

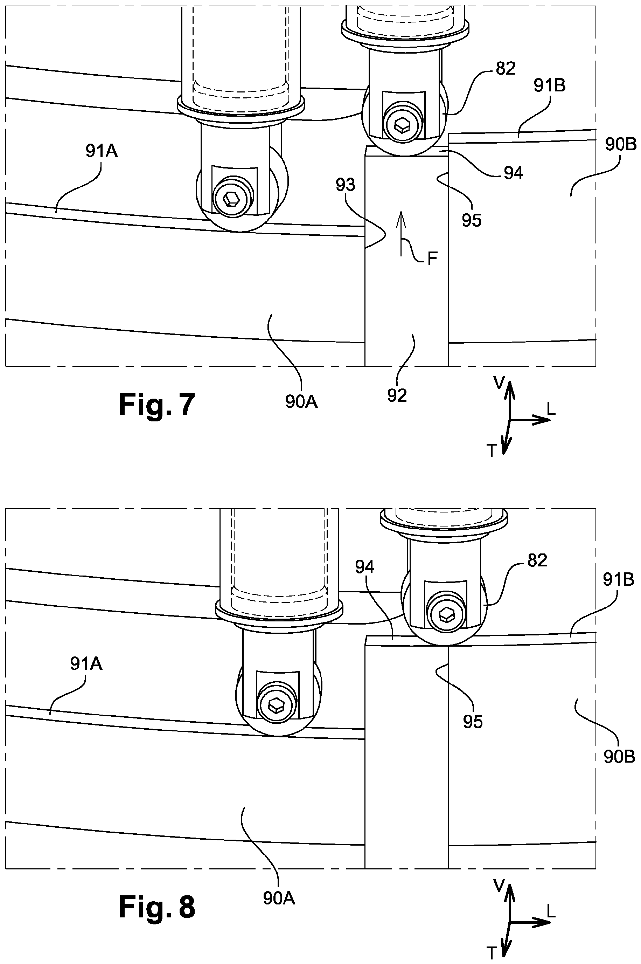

Le tronçon 92 élévateur comporte un chemin 94 de came sur lequel le galet 82 est destiné à rouler qui s'étend depuis une extrémité 94A amont jusqu'à une extrémité 94B aval. Le tronçon 92 élévateur est monté coulissant verticalement entre une position inférieure dans laquelle l'extrémité amont de son chemin 94 de came est à niveau avec le chemin 91A inférieur du segment 90A amont, comme illustré à la figure 4, et une position supérieure dans laquelle l'extrémité aval de son chemin 94 de came est à niveau avec le chemin 91B supérieur du segment 90B aval, comme illustré à la figure 7.

Ainsi, lorsque le tronçon 92 élévateur occupe sa position inférieure, l'extrémité amont de son chemin 94 de came est ainsi à niveau avec la position active du galet 82 suiveur de came, tandis que lorsqu'il occupe sa position supérieure, l'extrémité aval de son chemin 94 de came est à niveau avec la position inactive du galet 82 suiveur de came.

Ainsi, en position supérieure du tronçon 92 élévateur, l'extrémité amont de son chemin 94 de came est située au-dessus du niveau du chemin 91A inférieur du segment 90A amont, tandis qu'en position inférieure, l'extrémité aval de son chemin 94 de came est située au-dessous du niveau du chemin 91B supérieur du tronçon 90B aval.

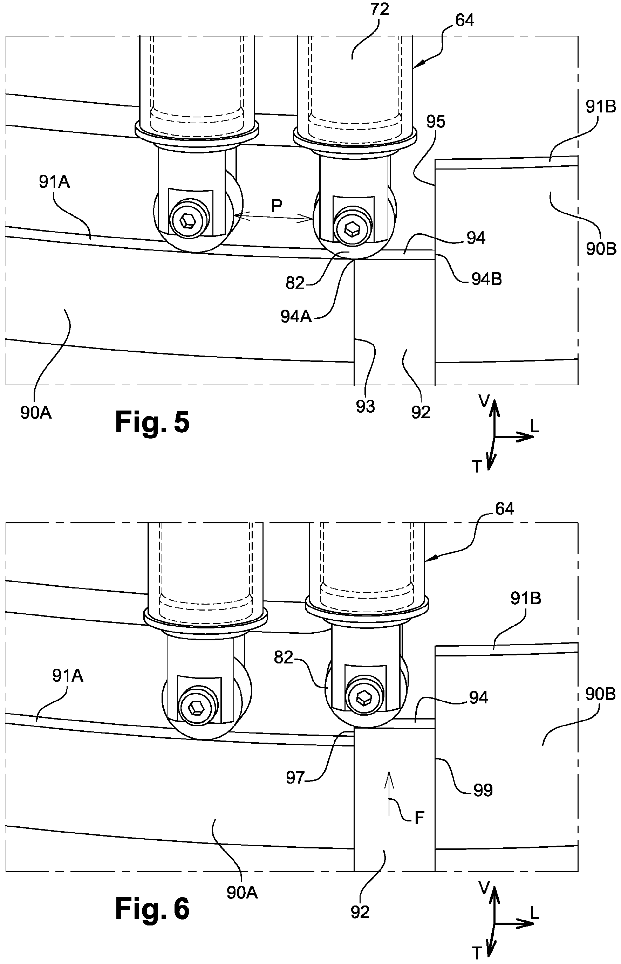

Comme cela est représenté aux figures 5 et 6, le tronçon 92 élévateur commence sa course de déplacement vers sa position supérieure, indiquée par la flèche F, seulement après que le galet 82 a commencé à rouler sur son chemin 94 de came. Le tronçon 92 élévateur devra en outre avoir atteint sa position supérieure avant que le galet 82 n'entre en contact avec la face 95 d'extrémité amont du segment 90B aval de came, comme représenté aux figures 7 et 8.

Le tronçon 92 élévateur est ensuite commandé vers sa position inférieure avant que le galet 82 du poussoir 64 suivant n'entre en collision avec la face 97 verticale d'extrémité amont du tronçon 92 élévateur.

Dans l'exemple représenté aux figures, le tronçon 92 élévateur présente un chemin 94 de came de profil plat orthogonal à la direction de déplacement du galet. En ce cas, la course de déplacement du tronçon 92 élévateur est égale à la distance séparant verticalement les chemins 91A, 91B des deux segments 90A, 90B de came.

En variante non représentée de l'invention, le chemin de came du tronçon élévateur peut présenter une pente légèrement montante, de l'ordre de quelques degrés. Dans ce cas, la course de déplacement du tronçon élévateur sera inférieure à la distance séparant verticalement les deux chemins des segments de came amont et aval.

L'objectif étant de réduire la durée de l'opération de dévêtissage, le chemin 94 de came du tronçon 92 élévateur présente une longueur très faible qui est inférieure au pas P entre les galets 82 de deux poussoirs 64 successifs. Par exemple, la longueur du chemin 94 de came du tronçon 92 élévateur est sensiblement égale au diamètre du galet 82.

En outre, l'invention vise à accélérer la vitesse, déjà très rapide, de défilement des préformes.

Pour ces deux raisons, un cycle de montée et descente du tronçon élévateur doit être extrêmement rapide, par exemple inférieur à 100 ms, plus particulièrement de l'ordre de 70 ms.

De plus, l'effort nécessaire pour soulever le poussoir 64 est très élevé, par exemple de l'ordre de 1200 N.

Il est donc nécessaire de commander les déplacements du tronçon 92 élévateur avec des moyens de commande très rapides, très réactifs et très puissants.

A cet effet, l'invention propose de mouvoir le tronçon 92 élévateur par un moteur 96 électrique. Un tel moteur 96 électrique est en effet suffisamment puissant et rapide pour remplir cette fonction.

Dans l'exemple représenté à la figure 8, le moteur 96 électrique est ici un moteur linéaire comportant une tige 98 motrice commandée en coulissement dans les deux sens, ici verticalement comme cela est indiqué par la flèche C, par une force électromagnétique. Plus particulièrement un tel moteur 96 électrique linéaire comporte un corps 100 de stator qui est équipé d'organes électromagnétiques annulaire commandés dans lequel la tige 98 motrice, formant un rotor linéaire, est montée coulissante verticalement. La tige 98 est reçue coulissante dans le corps 100 de stator. La tige 98 motrice est munie d'organes ferromagnétiques ou électromagnétiques, par exemple des aimants permanents, qui réagissent en fonction du champ magnétique produit par le corps 100 de stator pour la déplacer dans l'une et dans l'autre de ses deux directions de coulissement.

Le tronçon 92 élévateur est monté solidaire en déplacement avec la tige 98 motrice.

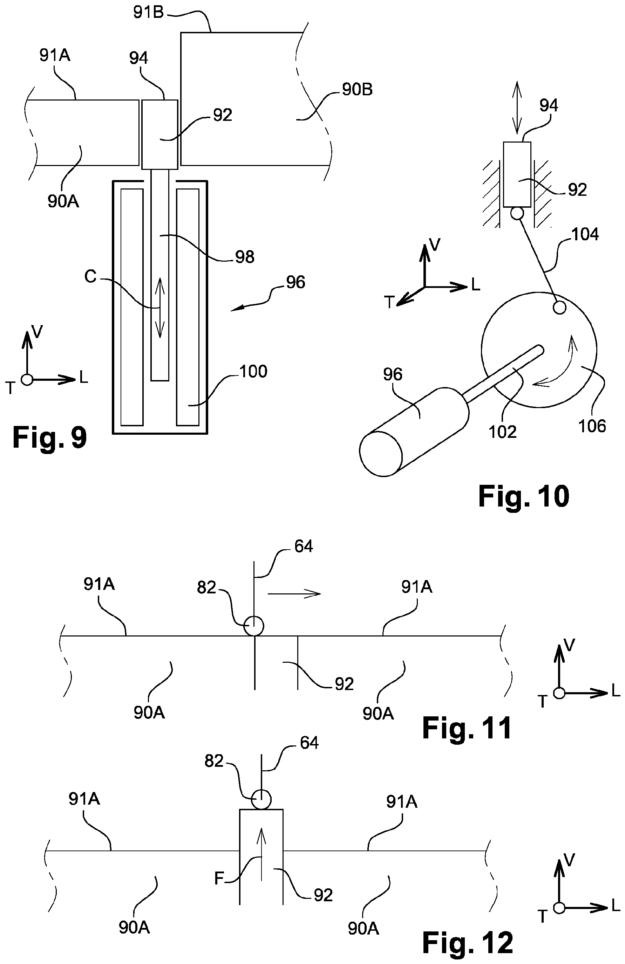

En variante de l'invention représentée à la figure 9, le moteur 96 électrique est un moteur synchrone qui comporte un arbre 102 moteur rotatif. Dans ce cas, l'arbre 102 moteur entraîne un premier système bielle 104 - manivelle 106 qui transforme le mouvement de rotation de l'arbre 102 moteur en mouvement de coulissement du tronçon 92 élévateur. A cet égard, l'arbre 102 moteur s'étend ici orthogonalement à la direction verticale de coulissement du tronçon 92 élévateur.

Selon encore une autre variante, un deuxième système bielle-manivelle est interposé entre le moteur synchrone et le premier système bielle-manivelle. Dans ce cas, la manivelle du deuxième système est entraînée par l'arbre moteur rotatif, la bielle du deuxième système relie la manivelle du deuxième système à la manivelle du premier système afin d'entraîne cette dernière en rotation. La bielle du premier système relie enfin la manivelle du premier système au tronçon élévateur.

Comme illustré sur la figure 1, le dispositif 10 de convoyage définit, autour de la roue 52 :
- un point D de dévêtissage, qui s'étend en aval (dans le sens de rotation de la roue 52, qui est le sens antihoraire sur la figure 3) du point M d'engrenage et qui coïncide avec le tronçon 92 élévateur qui permet de faire monter le galet 82 depuis le segment 90A amont jusqu'au segment 90B aval et dans laquelle les poussoirs 64 sont déplacés de leur position active à leur position inactive ;
- un point V de vêtissage, qui se trouve en aval du point D de dévêtissage et en amont du point L de libération, et où le chemin 91 de came présente un décrochement entre le segment 90B supérieur et le segment 90A inférieur, ce qui provoque, sous l'effet de la brusque descente du galet 82 sous l'effet de la détente du ressort 86 de rappel, le passage des poussoirs 64 de leur position inactive à leur position active ;
- une zone ZV de vêtissage qui s'étend, dans l'exemple illustré, à l'opposé du brin 26B engrené, entre le point V de vêtissage et le point D de dévêtissage (c'est-à-dire, dans l'exemple illustré, sur une extension angulaire de plus de 180°) ; dans la zone ZD de dévêtissage, les poussoirs 64 sont en position active, les galets 82 inférieurs roulant sur le chemin 91A inférieur du segment 90A de came ;
- une section ZD de dévêtissage, qui s'étend du point D de dévêtissage au point V de vêtissage et dans laquelle les poussoirs 64 sont en position inactive, les galets 82 roulant sur le chemin 91B supérieur du segment 90B de came.

Comme illustré sur la figure 1, les préformes 12 sont chargées sur la roue 52 au point V de vêtissage, au moyen d'un premier dispositif de transfert qui se présente par exemple sous forme d'une roue 108 étoilée d'alimentation dont la rotation est synchronisée avec celle de la roue 52 et qui met les préformes 12 au pas défini par celle-ci. Les préformes 12 ainsi chargées sur la chaîne 26 circulent dans la station de conditionnement thermique en partant par le brin 26C aller.

Les préformes 12 préchauffées reviennent ensuite vers la roue 52 par le brin 26A retour. Un deuxième dispositif de transfert est formé par une roue 110 étoilée de réception qui est agencée tangente avec la roue 52 au point D de dévêtissage. La rotation du deuxième dispositif de transfert formé par la roue 110 de réception est synchronisée avec celle de la roue 52 pour que des encoches de la roue 110 de réception coïncident avec des échancrures 56 de la roue 52 pour prendre en charge individuellement chaque préforme 12 préchauffée.

Ainsi, les tournettes 27 de la chaîne 26 circulent à vide entre le point D de dévêtissage et le point V de vêtissage.

La rotation de la roue 52 par rapport au bâti 22 entraîne chaque poussoir 64 (avec son galet 82 inférieur) dans un trajet circulaire le long duquel le galet 82 inférieur roule sur le chemin 91 de came. Au point M d'engrenage, où chaque poussoir 64 est dans sa position active, la queue 68 vient engrener l'embout 51 d'un mandrin 38 et l'alvéole 60 correspondante vient engrener la gorge de la douille.

Passé le point M d'engrenage, le poussoir 64 circule tout d'abord jusqu'au point D de dévêtissage en demeurant dans sa position active.

Lorsque le poussoir 64 arrive au point D de dévêtissage, la préforme 12 commence à être prise en charge par la roue 110 de réception. Dans le même temps, le galet 82 commande à rouler sur le chemin 94 de came du tronçon 92 élévateur qui occupe sa position inférieure. Pendant que le galet 82 roule sur le chemin 94 de came, le tronçon 92 élévateur est coulissé verticalement vers sa position supérieure par le moteur 96 électrique. Le coulissement vertical du tronçon 92 élévateur provoque ainsi le déplacement du poussoir 64 jusqu'à sa position inactive. Le poussoir 64 déplace ainsi le mandrin 38 vers sa position inactive. La tête 44 du mandrin 38 est ainsi extraite du col 16 de la préforme 12 tandis que la préforme 12 est retenue verticalement par butée contre la face 36 de butée de la douille 30, ce qui permet à la préforme 12 préchauffée d'être totalement prise en charge par la roue 110 de réception et de s'éloigner de la chaîne 26.

Le tronçon 92 élévateur est ensuite commandé activement par le moteur 96 vers sa position inférieure avant l'arrivée du galet 82 du poussoir 64 suivant.

L'opération de dévêtissage est réalisée en un temps très court alors que la préforme 12 est déjà en prise avec les encoches de la roue 110 de réception. Cela évite ainsi les mouvements de rotation non maîtrisés de la préforme 12 autour de son axe principal.

Selon un deuxième mode de réalisation de l'invention qui peut être combiné avec le premier mode de réalisation, il est prévu de pouvoir éjecter une préforme 12 dite "mal vêtie", c'est-à-dire mal positionnée par rapport au mandrin 38, entre le point V de vêtissage et le point L de libération. L'éjection de la préforme 12 a lieu en un point E d'éjection. Le point E d'éjection est ainsi agencé dans la zone de vêtissage, entre le point V de vêtissage, y compris le point V de vêtissage, et le point L de libération, y compris le point L de libération.

En effet, compte tenu de la cadence de production, il peut arriver, qu'une préforme 12 soit mal positionnée (c'est-à-dire que la préforme 12 n'est pas centrée par rapport au mandrin 38) lorsque le poussoir 64 parvient au point V de vêtissage.

Dans ce cas, le mandrin 38 ne peut pas s'emboîter correctement dans le col 16 de la préforme 12 et reste bloqué dans une position proche de sa position inactive, tout en venant appuyer sur le bord du col 16, qui se trouve ainsi comprimé entre le mandrin 38 et la couronne 54 inférieure.

Il n'est pas souhaitable que la préforme 12 soit maintenue dans cet état : elle risque en effet, au point L de libération, d'être violemment projetée hors de la roue 52, ce qui est susceptible de causer des dommages à des éléments chauffants (ou des blessures aux personnes) alentour. Les éléments chauffants de la station de conditionnement thermique sont par exemple des lampes à infrarouge ou des diodes électroluminescentes.

Il est prévu un capteur (non représenté), positionné dans la zone ZV de vêtissage, propre à détecter tout écartement d'un poussoir 64 de sa position active (signe que le mandrin 38 n'est pas dans sa propre position active et n'est donc pas emboîté dans le col 16 de la préforme 12). Il s'agit par exemple d'un capteur de proximité de type inductif. Le dispositif 10 de convoyage comprend en outre une unité de contrôle à laquelle le capteur est connecté et qui commande l'éjection de la préforme 12 mal positionnée. Le capteur est agencé entre le point V de vêtissage et le point E d'éjection.

Comme représenté schématiquement aux figures 11 et 12, un tronçon 92 élévateur est agencé entre deux segments 90A de came de la zone ZV de vêtissage en aval du capteur de vêtissage, présentant tous les deux un chemin 91A inférieur de came qui sont au même niveau. Le tronçon 92 élévateur est agencé au point E d'éjection.

Ainsi, lorsque les préformes 12 sont correctement positionnées sur leur mandrin 38, l'unité de contrôle laisse le tronçon 92 élévateur en position inférieure, le galet 82 roule en ligne droite, et le poussoir 64 reste en position active en passant par le point E d'éjection.

Lorsqu'une préforme 12 mal positionnée est détectée, l'unité de contrôle commande le tronçon 92 élévateur en position supérieure lors du passage du galet 82 sur son chemin 94 de came. Le poussoir 64 est alors commandé temporairement en position inactive, comme représenté à la figure 12. La tête 44 du mandrin 38 est alors soulevée par rapport à la préforme 12 mal positionnée, et la préforme 12 tombe ainsi dans un bac de récupération situé sous la roue 52, à l'aplomb du point E d'éjection.

La force centrifuge peut être suffisante pour provoquer l'éjection de la préforme 12 de la roue 52, mais un blocage n'est pas impossible. C'est pourquoi, il est préférable que le dispositif 10 de convoyage soit munie, au point E d'éjection, d'une soufflette (non représentée) dirigée vers le col de chaque préforme 12. Cette soufflette, alimentée en air sous pression, produit un flux d'air suffisamment puissant pour déloger la préforme 12 de son échancrure 56 et l'éjecter ainsi de la couronne 54 inférieure.

Le retour du poussoir 64 débarrassé de sa préforme 12 mal positionnée vers sa position active peut être réalisé par le passage du galet 82 au-delà de l'extrémité aval du chemin 94 de came tandis que le tronçon 92 élévateur occupe une position au-dessus de sa position inférieure. En ce cas, le poussoir 64 est rappelé subitement vers sa position active par le ressort 86 et le galet 82 est stoppé par le chemin 91A inférieur du segment de came aval.

Selon une variante, le tronçon 92 élévateur est commandé vers sa position inférieure tandis que le galet 82 roule encore son chemin 94 de came. Le galet 82 passe sur le chemin 91A inférieur du segment de came aval une fois que le tronçon 92 élévateur est revenu dans sa position inférieure. Dans cette variante, il n'y a pas de choc entre le galet 82 et le chemin 91A inférieur de came.

Dans les deux modes de réalisation, on comprend qu'il est nécessaire de commander le tronçon 92 élévateur au bon moment. Le déclencher une fraction de seconde trop tôt (ou trop tard) conduirait en effet à endommager le poussoir 64 car le galet 82 buterait soit contre la face amont du tronçon 92 élévateur, soit contre la face 95 d'extrémité amont du segment 90B aval.

C'est pourquoi il convient que l'unité de contrôle puisse identifier le poussoir 64 concerné et connaître sa position angulaire instantanée, de façon à déclencher le moteur 96 au bon moment.

Le dispositif 10 de convoyage comprend à cet effet un dispositif (non représenté) de détermination de la position angulaire instantanée de la roue 52. Un tel dispositif de détermination est déjà utilisé par ailleurs pour commander d'autres accessoires de l'installation de production et ne sera donc pas décrite plus en détails ici. Ce dispositif comprend généralement un calculateur intégré à l'unité de contrôle. Ce calculateur reçoit à chaque instant d'un élément tournant de référence positionné sur la ligne de production une information de position angulaire lui permettant de calculer la position angulaire instantanée de cet élément tournant. Cet élément tournant de référence est, typiquement, le carrousel de la souffleuse, qui est généralement de grand diamètre (en comparaison notamment du diamètre, relativement plus faible, de la roue 52).

Compte tenu de la continuité de la ligne de production, et en vertu de rapports de réduction, il est possible de déduire de la position angulaire de l'élément tournant de référence la position angulaire instantanée de la roue 52, de sorte qu'il n'est pas nécessaire d'équiper tous les éléments tournants de codeurs angulaires (de type roulement instrumenté).

En effet, à cadence de production stabilisée, les vitesses de rotation des divers éléments tournants sont constantes. Ainsi, en connaissant la vitesse de rotation du carrousel de la souffleuse, on peut en déduire la position angulaire instantanée de la roue 52.

La vitesse peut être calculée à l'aide d'une information angulaire fournie par un codeur monté sur le carrousel de la souffleuse. Un tel codeur fonctionne par exemple par effet Hall et fournit au calculateur des impulsions à une fréquence proportionnelle, dont le calculateur déduit par simple division la vitesse de rotation du carrousel.

Le calculateur en déduit alors la position angulaire instantanée de la roue 52.

## Revendications

1. Dispositif (10) de convoyage de corps creux pour une installation de fabrication de récipients par formage de préformes, le dispositif de convoyage comportant :
- au moins un élément (24) de transport comportant au moins un mandrin (38) monté coulissant verticalement entre une position active dans laquelle une tête (44) du mandrin est destinée à être emmanchée dans un col (16) d'un corps creux (12) et une position inactive dans laquelle la tête (44) est destinée à être extraite du col ;
- un suiveur (82) de came qui est solidaire en coulissement du mandrin (38) entre une position active correspondant à la position active du mandrin (38) et une position inactive correspondant à la position inactive du mandrin (38) ;
- un segment (90A) amont inférieur de came présentant un premier chemin (91A) de came le long duquel un suiveur (82) de came occupe sa position active ;
- un tronçon intermédiaire de came agencé dans le prolongement du premier chemin (91A) de came pour le passage du suiveur (82) de came depuis sa position active jusqu'à sa position inactive ;
**caractérisé en ce que** le tronçon intermédiaire est un tronçon (92) élévateur présentant un chemin (94) intermédiaire de came, le tronçon (92) élévateur étant monté coulissant entre une position inférieure dans laquelle une extrémité (94A) amont de son chemin (94) de came est à niveau avec le premier chemin (91A) de came et une position supérieure dans laquelle une extrémité (94B) aval de son chemin (94) de came est à niveau avec la position inactive du suiveur (82) de came.

2. Dispositif (10) selon la revendication précédente, **caractérisé en ce qu'**il comporte un segment (90B) de came aval supérieur agencé directement en aval du tronçon (92) élévateur et présentant un deuxième chemin (91B) de came le long duquel le suiveur (82) de came commande le mandrin (38) dans sa position inactive, une extrémité (94B) aval du chemin (94) de came du tronçon (92) élévateur étant à niveau avec le deuxième chemin (91B) de came lorsque le tronçon (92) élévateur occupe sa position supérieure.

3. Dispositif (10) selon la revendication 1, **caractérisé en ce qu'**il comporte un segment de came aval inférieur agencé directement en aval du tronçon (92) élévateur et présentant un deuxième chemin de came le long duquel le suiveur (82) de came commande le mandrin (38) dans sa position active.

4. Dispositif (10) de convoyage selon la revendication précédente, **caractérisé en ce que** le tronçon (92) élévateur est mu par un moteur (96) électrique.

5. Dispositif (10) selon la revendication précédente, **caractérisé en ce que** le moteur (96) électrique est un moteur linéaire comportant une tige (98) motrice commandée en coulissement par une force électromagnétique.

6. Dispositif (10) selon la revendication précédente, **caractérisé en ce que** le tronçon (92) élévateur est monté solidaire en déplacement avec la tige (98) motrice.

7. Dispositif (10) selon la revendication 4, **caractérisé en ce que** le moteur électrique est un moteur synchrone qui comporte un arbre (102) moteur rotatif.

8. Dispositif (10) selon la revendication précédente, **caractérisé en ce que** l'arbre (102) moteur entraîne un système bielle (104) - manivelle (106) qui transforme le mouvement de rotation de l'arbre (102) moteur en mouvement de coulissement du tronçon (92) élévateur.

9. Dispositif (10) selon l'une quelconque des revendications précédentes, **caractérisé en ce que** le tronçon (92) élévateur présente un profil sensiblement rectiligne orthogonal à la direction de déplacement de l'élément (24) de transport.

10. Installation de fabrication de récipients par formage à partir de préformes comportant un dispositif (10) de convoyage réalisé selon l'une quelconque des revendications précédentes, l'installation comportant :
- une pluralité desdits éléments (24) de transport formant les maillons d'une chaîne (26) de transport fermée ;
- une roue (52) de guidage qui est montée à rotation sur un bâti (22) fixe qui engrène la chaîne (26) de transport et qui embarque une pluralité de poussoirs (64) portant un suiveur (82) de came propres à venir en prise avec chaque mandrin (38) portés par les éléments (24) de transport ;
- les segments (90A, 90B) de came fixes étant portés par le bâti (22) ;
- une roue (110) de réception qui est rotative de manière synchronisée avec la roue (52) de guidage et qui comporte des organes de réception individuelle de chaque préforme (12) à un point (D) de dévêtissage tangent avec la roue (52) de guidage ;
**caractérisé en ce que** le tronçon (92) élévateur est agencé au point (D) de dévêtissage pour permettre l'extraction du mandrin (38) des préformes (12) lorsque celles-ci sont prises en charge par l'organe de réception.

11. Installation de fabrication de récipients par formage à partir de préformes comportant un dispositif (10) de convoyage réalisé selon l'une quelconque des revendications 1 à 9, l'installation comportant :
- une pluralité desdits éléments (24) de transport formant les maillons d'une chaîne (26) de transport fermée ;
- une roue (52) de guidage qui est montée à rotation sur un bâti (22) fixe qui engrène la chaîne (26) de transport et qui embarque une pluralité desdits poussoirs (64) portant un suiveur (82) de came propres à venir en prise avec chaque mandrin (38) portés par les éléments (24) de transport ;
- les segments (90A, 90B) de came fixes étant portés par le bâti (22) ;
- une roue (108) d'alimentation qui est rotative de manière synchronisée avec la roue (52) de guidage et qui comporte des organes de transport individuel de chaque préforme jusqu'à un point (V) de vêtissage tangent avec la roue (52) de guidage, les préformes (12) poursuivant leur course le long de la roue (52) de guidage le long d'une zone (ZV) de vêtissage ;
**caractérisé en ce que** le tronçon (92) élévateur est agencé dans la zone (ZV) de vêtissage.

12. Installation selon l'une quelconque des revendications 10 à 11, **caractérisé en ce que** le dispositif (10) de convoyage équipe une station de conditionnement thermique qui est agencée en amont d'une station de formage, notamment d'une station de soufflage.

## Patentansprüche

1. Vorrichtung (10) zur Beförderung von Hohlkörpern für eine Anlage zur Fertigung von Behältern durch Formen von Vorformlingen, wobei die Beförderungsvorrichtung aufweist:
- mindestens ein Transportelement (24), das mindestens einen Dorn (38) aufweist, der zwischen einer aktiven Stellung, in der ein Kopf (44) des Dorns dazu bestimmt ist, in einen Hals (16) eines Hohlkörpers (12) eingeschoben zu werden, und einer inaktiven Stellung senkrecht gleitend montiert ist, in der der Kopf (44) dazu bestimmt ist, aus dem Hals entfernt zu werden;
- einen Nockenfolger (82), der mit dem Dorn (38) zwischen einer aktiven Stellung entsprechend der aktiven Stellung des Dorns (38) und einer inaktiven Stellung entsprechend der inaktiven Stellung des Dorns (38) gleitend fest verbunden ist;
- ein unteres vorderes Nockensegment (90A), das eine erste Nockenbahn (91A) aufweist, entlang der ein Nockenfolger (82) seine aktive Stellung einnimmt;
- einen Nockenzwischenabschnitt, der in der Verlängerung der ersten Nockenbahn (91A) für den Durchgang des Nockenfolgers (82) von seiner aktiven Stellung in seine inaktive Stellung angeordnet ist;
**dadurch gekennzeichnet, dass** der Zwischenabschnitt ein Hebeabschnitt (92) ist, der eine Nockenzwischenbahn (94) aufweist, wobei der Hebeabschnitt (92) zwischen einer unteren Stellung, in der ein vorderes Ende (94A) seiner Nockenbahn (94) auf gleicher Höhe mit der ersten Nockenbahn (91A) ist, und einer oberen Stellung gleitend montiert ist, in der ein hinteres Ende (94B) seiner Nockenbahn (94) auf gleicher Höhe mit der inaktiven Stellung des Nockenfolgers (82) ist.

2. Vorrichtung (10) nach dem vorhergehenden Anspruch, **dadurch gekennzeichnet, dass** sie ein oberes hinteres Nockensegment (90B) aufweist, das direkt hinter dem Hebeabschnitt (92) angeordnet ist und eine zweite Nockenbahn (91B) aufweist, entlang der der Nockenfolger (82) den Dorn (38) in seine inaktive Stellung steuert, wobei ein hinteres Ende (94B) der Nockenbahn (94) des Hebeabschnitts (92) auf gleicher Höhe ist wie die zweite Nockenbahn (91B), wenn der Hebeabschnitt (92) seine obere Stellung einnimmt.

3. Vorrichtung (10) nach Anspruch 1, **dadurch gekennzeichnet, dass** sie ein unteres hinteres Nockensegment aufweist, das direkt hinter dem Hebeabschnitt (92) angeordnet ist und eine zweite Nockenbahn aufweist, entlang der der Nockenfolger (82) den Dorn (38) in seine aktive Stellung steuert.

4. Beförderungsvorrichtung (10) nach dem vorhergehenden Anspruch, **dadurch gekennzeichnet, dass** der Hebeabschnitt (92) von einem Elektromotor (96) bewegt wird.

5. Vorrichtung (10) nach dem vorhergehenden Anspruch, **dadurch gekennzeichnet, dass** der Elektromotor (96) ein Linearmotor ist, der eine Antriebsstange (98) aufweist, die durch eine elektromagnetische Kraft gleitbeweglich gesteuert wird.

6. Vorrichtung (10) nach dem vorhergehenden Anspruch, **dadurch gekennzeichnet, dass** der Hebeabschnitt (92) verschiebebeweglich fest mit der Antriebsstange (98) verbunden montiert ist.

7. Vorrichtung (10) nach Anspruch 4, **dadurch gekennzeichnet, dass** der Elektromotor ein Synchronmotor ist, der eine drehbare Antriebswelle (102) aufweist.

8. Vorrichtung (10) nach dem vorhergehenden Anspruch, **dadurch gekennzeichnet, dass** die Antriebswelle (102) ein System aus Schubstange (104) und Kurbel (106) antreibt, das die Drehbewegung der Antriebswelle (102) in eine Gleitbewegung des Hebeabschnitts (92) umwandelt.

9. Vorrichtung (10) nach einem der vorhergehenden Ansprüche, **dadurch gekennzeichnet, dass** der Hebeabschnitt (92) ein im Wesentlichen geradliniges Profil orthogonal zur Verschieberichtung des Transportelements (24) aufweist.

10. Anlage zur Fertigung von Behältern durch Formen ausgehend von Vorformlingen, die eine gemäß einem der vorhergehenden Ansprüche hergestellte Beförderungsvorrichtung (10) aufweist, wobei die Anlage aufweist:
- eine Vielzahl der Transportelemente (24), die die Glieder einer geschlossenen Transportkette (26) formen;
- ein Führungsrad (52), das drehbar auf ein ortsfestes Gestell (22) montiert ist, das in die Transportkette (26) eingreift und eine Vielzahl von einen Nockenfolger (82) tragenden Stößeln (64) mitnimmt, die mit jedem Dorn (38) in Eingriff kommen können, die von den Transportelementen (24) getragen werden;
- wobei die ortsfesten Nockensegmente (90A, 90B) vom Gestell (22) getragen werden;
- ein Empfangsrad (110), das synchron mit dem Führungsrad (52) drehbar ist und das Organe für den individuellen Empfang jedes Vorformlings (12) an einem Abstreifpunkt (D) aufweist, der das Führungsrad (52) tangiert;
**dadurch gekennzeichnet, dass** der Hebeabschnitt (92) am Abstreifpunkt (D) angeordnet ist, um die Entnahme des Dorns (38) aus den Vorformlingen (12) zu erlauben, wenn diese vom Empfangsorgan übernommen werden.

11. Anlage zur Fertigung von Behältern durch Formen ausgehend von Vorformlingen, die eine gemäß einem der Ansprüche 1 bis 9 hergestellte Beförderungsvorrichtung (10) aufweist, wobei die Anlage aufweist:
- eine Vielzahl der Transportelemente (24), die die Glieder einer geschlossenen Transportkette (26) bilden;
- ein Führungsrad (52), das drehbar auf ein ortsfestes Gestell (22) montiert ist, das in die Transportkette (26) eingreift und das eine Vielzahl der einen Nockenfolger (82) tragenden Stößel (64) mitnimmt, die mit jedem Dorn (38) in Eingriff kommen können, die von den Transportelementen (24) getragen werden;
- wobei die ortsfesten Nockensegmente (90A, 90B) vom Gestell (22) getragen werden;
- ein Versorgungsrad (108), das synchron mit dem Führungsrad (52) drehbar ist und das Organe für den individuellen Transport jedes Vorformlings bis zu einem das Führungsrad (52) tangierenden Aufziehpunkt (V) aufweist, wobei die Vorformlinge (12) ihren Weg entlang des Führungsrads (52) entlang einer Aufziehzone (ZV) verfolgen;
**dadurch gekennzeichnet, dass** der Hebeabschnitt (92) in der Aufziehzone (ZV) angeordnet ist.

12. Anlage nach einem der Ansprüche 10 bis 11, **dadurch gekennzeichnet, dass** die Beförderungsvorrichtung (10) eine Wärmekonditionierungsstation bestückt, die vor einer Formgebungsstation angeordnet ist, insbesondere einer Blasformstation.

## Claims

1. Device (10) for conveying hollow bodies for a facility for manufacturing containers by forming of preforms, the conveying device comprising:
- at least one transport element (24) comprising at least one mandrel (38) mounted so as to be able to slide vertically between an active position in which a head (44) of the mandrel is to be fitted into a neck (16) of a hollow body (12) and an inactive position in which the head (44) is to be withdrawn from the neck;
- a cam follower (82) which slides as one with the mandrel (38) between an active position corresponding to the active position of the mandrel (38) and an inactive position corresponding to the inactive position of the mandrel (38);
- a cam lower upstream segment (90A) having a first cam track (91A) along which a cam follower (82) occupies its active position;
- an intermediate cam portion arranged in the extension of the first cam track (91A) for the cam follower (82) to pass from its active position to its inactive position;
**characterized in that** the intermediate portion is an elevating portion (92) having an intermediate cam track (94), the elevating portion (92) being mounted so as to be able to slide between a lower position in which an upstream end (94A) of its cam track (94) is level with the first cam track (91A), and an upper position in which a downstream end (94B) of its cam track (94) is level with the inactive position of the cam follower (82).

2. Device (10) according to the preceding claim, **characterized in that** it comprises an upper downstream cam segment (90B) arranged directly downstream of the elevating portion (92) and having a second cam track (91B) along which the cam follower (82) controls the mandrel (38) in its inactive position, a downstream end (94B) of the cam track (94) of the elevating portion (92) being level with the second cam track (91B) when the elevating portion (92) occupies its upper position.

3. Device (10) according to Claim 1, **characterized in that** it comprises a lower downstream cam segment arranged directly downstream of the elevating portion (92) and having a second cam track along which the cam follower (82) controls the mandrel (38) in its active position.

4. Conveying device (10) according to the preceding claim, **characterized in that** the elevating portion (92) is moved by an electric motor (96).

5. Device (10) according to the preceding claim, **characterized in that** the electric motor (96) is a linear motor comprising a motive stem (98) that is controlled so as to slide by an electromagnetic force.

6. Device (10) according to the preceding claim, **characterized in that** the elevating portion (92) is mounted so as to move as one with the motive stem (98) .

7. Device (10) according to Claim 4, **characterized in that** the electric motor is a synchronous motor which comprises a rotary motive shaft (102).

8. Device (10) according to the preceding claim, **characterized in that** the motive shaft (102) drives a connecting rod (104) - crank (106) system which converts the rotary movement of the motive shaft (102) into a sliding movement of the elevating portion (92).

9. Device (10) according to any one of the preceding claims, **characterized in that** the elevating portion (92) has an essentially straight profile orthogonal to the direction of movement of the transport element (24) .

10. Facility for manufacturing containers by forming starting from preforms, comprising a conveying device (10) embodied according to any one of the preceding claims, the facility comprising:
- a plurality of said transport elements (24) forming the links of a closed transport chain (26);
- a guide wheel (52) which is mounted so as to rotate on a fixed frame (22) which meshes with the transport chain (26) and which has installed on it a plurality of pushers (64) bearing a cam follower (82) that are able to come into engagement with each mandrel (38) borne by the transport elements (24) ;
- the fixed cam segments (90A, 90B) being borne by the frame (22);
- a receiving wheel (110) which rotates synchronously with the guide wheel (52) and which comprises members for individually receiving each preform (12) at a stripping point (D) that is tangential to the guide wheel (52);
**characterized in that** the elevating portion (92) is arranged at the stripping point (D) such that the mandrel (38) can be withdrawn from the preforms (12) when these are taken up by the receiving member.

11. Facility for manufacturing containers by forming starting from preforms, comprising a conveying device (10) embodied according to any one of Claims 1 to 9, the installation comprising:
- a plurality of said transport elements (24) forming the links of a closed transport chain (26);
- a guide wheel (52) which is mounted so as to rotate on a fixed frame (22) which meshes with the transport chain (26) and which has installed on it a plurality of said pushers (64) bearing a cam follower (82) that are able to come into engagement with each mandrel (38) borne by the transport elements (24);
- the fixed cam segments (90A, 90B) being borne by the frame (22);
- a supply wheel (108) which rotates synchronously with the guide wheel (52) and which comprises members for individually transporting each preform as far as a donning point (V) that is tangential to the guide wheel (52), the preforms (12) continuing their course along the guide wheel (52) along a donning zone (ZV);
**characterized in that** the elevating portion (92) is arranged in the donning zone (ZV).

12. Facility according to either one of Claims 10 and 11, **characterized in that** the conveying device (10) is fitted to a heat-treatment station that is arranged upstream of a forming station, in particular a blow-moulding station.
